(19) Europäisches Patentamt
European Patent Office
Office européen des brevets

(11) Veröffentlichungsnummer: **0 107 022**
**B1**

# (12) EUROPÄISCHE PATENTSCHRIFT

(45) Veröffentlichungstag der Patentschrift: **03.09.86**

(51) Int. Cl.⁴: **A 01 N 53/00**

(21) Anmeldenummer: **83109163.2**

(22) Anmeldetag: **16.09.83**

(54) **Köder zur Bekämpfung von Fliegen.**

(30) Priorität: **29.09.82 DE 3235931**

(43) Veröffentlichungstag der Anmeldung: **02.05.84 Patentblatt 84/18**

(45) Bekanntmachung des Hinweises auf die Patenterteilung: **03.09.86 Patentblatt 86/36**

(84) Benannte Vertragsstaaten: **AT BE CH DE FR GB IT LI NL SE**

(56) Entgegenhaltungen:
**FR-A-2 382 426**

**CHEMICAL ABSTRACTS, Band 96, Nr. 3, 18. Januar 1982, Seite 110, Nr. 16035h, Columbus, Ohio, USA, M.G. ISMAILOV et al.: "Effectiveness of poisoned baits"**
**CHEMICAL ABSTRACTS, Band 80, Nr. 5, 4. Februar 1974, Seite 110, Nr. 23525r, Columbus, Ohio, USA, A.P. GUPTA et al.: "Effectiveness of spray-dust-bait combination. Importance of sanitation in the control of German cockroaches in an inner-city area"**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Elbert, Alfred, Dr., Roggendorfstrasse 65, D-5000 Köln 80 (DE)**
Erfinder: **Behrenz, Wolfgang, Dr., Untergründemich 14, D-5063 Overath (DE)**
Erfinder: **Krehan, Ingomar, Dr., Ludwig- Jahn-Strasse 54, D-5000 Köln 40 (DE)**

EP 0 107 022 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die vorliegende Erfindung betrifft neue, ein Pyrethroid enthaltende Köder zur Bekämpfung von Fliegen und ein Verfahren zur Herstellung dieser Köder.

Das Auftreten von Resistenz macht bei der Bekämpfung von Hausungeziefer immer mehr Schwierigkeiten. Besonders die Bekämpfung von Fliegen ist namentlich in der Landwirtschaft mit Tierhaltung zu einem großen Problem geworden. Es wird daher eine Anwendung von Bekämpfungsmitteln in immer kürzeren Zeitabständen und mit immer höheren Wirkstoffkonzentrationen erforderlich, was aus den verschiedensten Gründen nicht wünschenswert ist.

Bei Fliegen ist Resistenz weit verbreitet. Sie erstreckt sich nicht nur auf chlorierte Kohlenwasserstoffe, Phosphorsäureester und Carbamate, sondern besteht bereits hier und da auch gegenüber den im jüngster Zeit entwickelten Pyrethroiden.

Die gebräuchlichsten Formulierungen zur Bekämpfung von Fliegen sind Aerosole und Ölsprühmittel im Haushalt und Emulsions- oder Suspensionspräparate im Stall. Da von den Phosphorsäureestern und Carbamaten auch Köderformulierungen zur Bekämpfung von Fliegen bekannt sind, wurde ihre Entwicklung auch von Pyrethroiden versucht (vgl. Danish Pest Infestation Laboratory Annual Report, 1978, J. Keiding, "Painton-baits", Laboratory tests). Die betreffenden Köder zeigten jedoch nur eine unzureichende Wirkung. Sie wurden deshalb nicht weiter entwickelt und erlangten keine praktische Bedeutung. Dieses war aufgrund des Standes der Technik auch nicht verwunderlich, da Pyrethroide bekanntlich neben einer insektiziden Wirkung auch eine erhebliche Fraß-Repellentwirkung auf Insektem ausüben.

Im übrigen ist bekannt, daß der 2,2-Dimethyl-3-(β, β-dichlorvinyl)-cyclopropancarbonsäure- α-cyano-3-phenoxy-4-fluor-benzylester sehr gute insektizide Eigenschaften besitzt und in die üblichen Formulierungen, wie Lösungen, Emulsionen bzw. Suspensionen usw., überführt werden kann (vgl. DE-OS 27 09 264). Köderformulierungen auf Basis dieses Wirkstoffes sind jedoch bisher noch nicht bekannt.

Es wurden jetzt neue Köder zur Fliegenbekampfüng gefunden, die aus

a) 0,1 bis 2,0 Gewichtsprozent 2,2-Dimethyl-3-β, dichlorvinyl)-cyclopropancarbonsäure-α-cyano-3 phenoxy-4-flour-benzylester der Formel

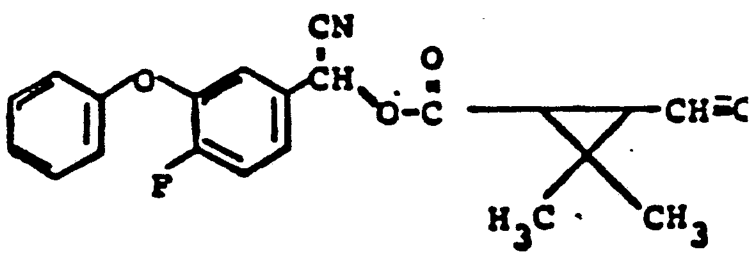

gegebenenfalls im Gemisch mit 0,1 bit 2,0 Gewichtsprozent eines oder mehrer zu Ungezieferbekämpfung geeigneter Wirkstoff,

b) gegebenenfalls 0,001 bis 5,0 Gewichtsprozent Formulierhilfsmitteln sowie gegebenenfalls weiteren Zusatzstoffen und

c) der Differenz aus 100 Gewichtsprozent und der Summe der prozentualen Anteile der übrigen Komphonenten mindestens eines Fraßlockstoffes

bestehen.

Weiterhin wurde gefunden, daß man die erfindungsgemäßen Köder herstellen kann, indem man

- 0,1 bis 2,0 Gewichtsprozent 2,2-Dimethyl-3-(β,β-dichlor-vinyl)-cyclopropancarbonsäure-α-cyano-3-phenoxy-4-fluor-benzylester der Formel (I), gegebenenfalls im Gemisch von 0,1 bis 2,0 Gewichtsprozent eines oder mehrerer zur Ungezieferbekämpfung geeigneter Wirkstoffe,

- mit gegebenenfalls 0,001 bis 5,0 Gewichtsprozent Formulierhilfsmitteln versetzt,

dann

- das dabei entstehende Gemisch mit der Differenz aus 100 Gewichtsprozent und der Summe der prozentualen Anteile der übrigen Komponenten mindestens eines Fraßlockstoffes sowie gegebenenfalls mit weiteren Zusatzstoffen intensiv vermischt und gegebenenfalls anschließend mahlt.

Es ist als äußerst überraschend zu bezeichnen, daß die erfindungsgemäßen Köder auf Basis von 2,2-Dimethyl-3-(β,β-dichlorvinyl)-cyclopropancarbonsäure-α-cyano-3-phenoxy-4-fluor-benzylester der Formel (I) wesentlich besser zur Bekämpfung von Fliegen geeignet sind als die bisher bekannten Formulierungen dieses Wirkstoffes. Aufgrund des Standes der Technik war sogar-anzunehmen, daß die erfindungsgemäßen Köder ebenso wie die bekannte Köderformulierung, die ein Pyrethroid als Wirkstoff enthält, eine Fraß-Repellent-Wirkung auf das Ungeziefer ausüben würde. Im Gegensatz zu den Erwarrungen ist dieses aber nicht der Fall.

Mit Hilfe der erfindungsgemäßen Köder kann vielmehr selbst dann ein befriedigender Wirkungsgrad erzielt werden, wenn weitaus weniger Wirkstoff ausgebracht wird als bei der Fliegenbekämpfung mit den bisher bekannten Formulierungen des Wirkstoffes der Formel (I). Ein derartiger Befund ließ sich keineswegs voraussagen.

Wie bereits erwähnt, können in den erfindungsgemäßen Ködern neben dem 2,2-Dimethyl-3-(β,β-dichlorvinyl)-cyclopropancarbonsäure-α-cyano-3-phenoxy-4-fluor-benzyl-ester der Formel (I) auch einer oder mehrere andere zur Fliegenbekämpfung geeigneten Wirkstoffe enthalten sein. Als derartige Wirkstoffe kommem vorzugsweise Diethylthiono-phosphoryl-oximino-phenylessigsäurenitril und 0,0-Dimethyl-S-(methylamino-carbonylmethyl)-thiolphosphorsäureester im Betracht.

Ferner weisen die erfindungsgemäßen Köder mindestens einen Fraßlockstoff auf, können aber auch ein Gemisch verschiedener Fraßlockstoffe enthalten. Als Fraßlockstoffe kommen dabei alle üblicherweise für einen solchen Zwcek verwendbaren Substanzen in Frage. Bevorzugt sind Eiweiß- oder Kohlehydrat-haltige Stoffe oder ihre Bausteine, wie z.B. Milchpulver, Eipulver, Fleischextrakt, Albumine, Globuline, Aminosäuren, Malzextrakte, Mehlprodukte, Monound Disaccharide, wie Glukose, Saccharose und Maltose.

Als Formulierungshilfsmittel kommen im vorliegenden Fall insbesondere Mahlhilfsmittel bzw. Trägerstoffe und Klebbzw. Quellmittel im Betracht. Beispielhaft für eine als Mahlhilfsmittel bzw. Trägerstoff dienende Substanz sei hochdisperse Kieselsäure genannt. Als Kleb- bzw. Quellmittel speziell aufgeführt sei Methylcellulose (= Tylose).

Zusatzstoffe, die in den erfindungsgemäßen Ködern enthalten sein können, sind vorzugsweise Farbstoffe, Konservierungsmittel und als Insektenlockstoffe wirkende Pheromone. Beispiele für Konservierungsmittel sind 2-Hydroxybiphenyl und Sorbinsäure. Als Beispiele für Farbstoffe seien Azofarbstoffe und Phthalocyaninfarbstoffe angeführt.

In den erfindungsgemäßen Ködern können die prozentualen Anteile der enthaltenen Komponenten innerhalb bestimmter Bereiche variiert werden. Der Anteil an Wirkstoff der Formel (I) liegt im allgemeinen zwischen 0,1 und 2,0 Gew.-%, vorzugsweise zwischen 0,25 und 1,5 Gew.-%. Zusätzliche zur Ungezieferbekämpfung geeignete Wirkstoffe können in Mengen von 0,1 bis 2,0 Gew.-%, vorzugsweise von 0,25 bis 1,5 Gew.-% enthalten sein. Formulierhilfsmittel sind im allgemeinen in Mengen von 0,01 bis 5,0 Gew.-%, vorzugsweise von 0,04 bis 4,0 Gew.-% vorhanden. Dabei liegen die Mengen an Mahlhilfsstoffen bzw. Trägerstoffen, wie z.B. an hochdisperser Kieselsäure, im allgemeinen zwischen 0,01 und 2,0 Gew.-%, vorzugsweise zwischen 0,04 und 0,8 Gew.-%; und die Mengen an Kleb- bzw. Quellmitteln, wie z.B. an Methylcellulose (= Tylose), liegen im allgemeinen zwischen 0 und 2,0 Gew.-%, vorzugsweise zwischen 0 und 1,5 Gew.-%. Der prozentuale Anteil an Fraßlockstoff(en) in den erfindungsgemäßen Ködern errechnet sich jeweils als Differenz aus 100 Gew.-% und der Summe der prozentualen Anteile der übrigen Komponenten.

Bei der Herstellung der erfindungsgemäßen Köder können vorzugsweise alle diejenigen Komponenten eingesetzt werden, die bereits im Zusammenhang mit der Beschreibung der erfindungsgemäßen Köder vorzugsweise genannt wurden.

Die Temperaturen können bei dem erfindungsgemäßen Verfahren zur Herstellung der neuen Köder innerhalb eines bestimmten Bereiches variiert werden. Im allgemeinen arbeitet man bei Temperaturen zwischen 10° C und 30° C, vorzugsweise bei Raumtemperatur.

Bei der Durchführung des erfindungsgemäßen Verfahrens geht man im allgemeinen so vor, daß man den Wirkstoff der Formel (I) sowie gegebenenfalls einen oder mehrere zur Fliegenbekämpfung geeignete Wirkstoffe im jeweils gehünschten Mengenverhältnis gegebenenfalls mit einem Formulierhilfsmittel versetzt und das dabei entstehende Gemisch mit mindestens einem Fraßlockstoff sowie gegebenenfalls weiteren Zusatzstoffen unter Rühren intensiv vermischt und gegebenenfalls anschließend auch in jeder beliebigen anderen Reihenfolge zusammengegeben werden. Enthält der herzustellende Köder neben dem Wirkstoff der Formel (I) noch einen oder mehrere weitere zur Fliegenbekämpfung geeignete Wirkstoffe, so empfiehlt es sich, jeden der Wirkstoffe separat mit jeweils mindestens einem Formulierhilfsstoff zu vermengen, die anfallenden Vormischungen mit den übrigen Komponenten zu vermischen und gegebenenfalls das dabei entstehende Produkt zu mahlen. Zum Vermengen der Komponenten können alle üblicherweise für derartige Zwecke verwendbaren Mischer eingesetzt werden. Ebenso kann die gegebenenfalls durchzuführende Mahlung in allen für derartige Zwecke gängigen Apparaturen vorgenommen werden.

Die erfindungsgemäßen Köder fallen bei ihrer Herstellung als Pulver an und können entweder in dieser Form als Streuköder ausgebracht werden, oder aber nach vorherigem Vermischen mit Wasser in streichfähige Formulierungen überführt werden. Ist die Verwendung als Streuköder beabsichtigt, so erübrigt sich bei der Herstellung die Zugabe von Kleb- bzw. Quellmitteln. Ferner ist eine Mahlung der Wirkstoff-Vormischungen dann nicht erforderlich.

Sollen die Köder hingegen vor ihrer Anwendung in Wasser gelöst oder dispergiert werden, so ist die Anwesenheit von Kleb- bzw. Quellmitteln nützlich und auch eine Mahlung der Wirkstoff-Vormischungen empfehlenswert.

Die erfindungsgemäßen Köder sind in hervorragendem Maße zur Bekämpfung von Fliegen geeignet, und zwar insbesondere zur Vernichtung von Fliegen in Gebäuden wie Stallungen, Vorratsräumen, Silos und Wohnhäusern.

Die Anwendung der erfindungsgemäßen Köder erfolgt entweder durch Verstreuen oder durch Verstreichen. Geschieht die Ungezieferbekämpfung mit Hilfe von Streuködern, so wird das pulverförmige Material entweder im trockenen oder feuchten Zustand ausgebracht. Dabei genügt es, eine oder wenige Stellen mit relativ

geringen Flächen zu behandeln. Ist ein Verstreichen der Ködermasse beabsichtigt, so vermengt man den Köder zunächst mit Wasser und streicht die entstehende Mischung auf Gegenstände, die sich in der Umgebung des zu bekämpfenden Ungeziefers befinden.

Die Herstellung und die Verwendung der erfindungsgemäßen Köder gehen aus den nachfolgenden Beispielen hervor.

**Herstellungsbeispiele**

**Beispiel 1**

600 g 2,2-Dimethyl-3-(β,β-dichlorvinyl)-cyclopropan-carbonsäure- α-cyano-3-phenoxy-4-fluor-benzylester und 400 g hochdisperse Kieselsäure werden in einer Rührapparatur innig gemischt. 8,4 g dieser Vormischung werden bei Raumtemperatur mit 7,5 g Methylcellulose (= Tylose) und 984,1 g Zucker innig vermischt und anschließend gemahlen. Man erhält auf diese Weise einen in Wasser dispergierbaren Köder mit einem Gehalt von 0,5 Gew.-% an 2,2-Dimethyl-3-(β,β-dichlorvinyl)-cyclopropancarbonsäure- α-cyano-3-phenoxy-4-fluor-benzylester.

**Beispiel 2**

0,133 kg einer Vormischung, die zu 60 Gew.-% aus 2,2-Dimethyl-3-(β,β-dichlorvinyl)-cyclopropancarbonsäure-α-cyano-3-phenoxy-4-fluor-benzylester und 40 Gew.-% hochdisperser Kieselsäure besteht, und 0,8 kg einer zweiten Vormischung, die zu 40 Gew.-% aus Diethylthionophosphoryl-α-oximino-phenylessigsäurenitril, und 60 Gew.-% hochdisperser Kieselsäure besteht, werden bei Raumtemperatur in einem Lödige-Mischer mit 0,24 kg Methylcellulose (= Tylose) und 30,827 kg Zucker innig vermengt und anschließend gemahlen. Man erhält auf diese Weise einen in Wasser dispergierbaren Köder mit einem Gehalt von 0, 25 Gew.-%, 2, 2-Dimethyl-3-(β,β-dichlorvinyl)-cyclopropan-carbonsäure- α -cyano-3-phenoxy-4-fluor-benzylester und einem Gehalt von 1 Gew.-% an Diethyl-thiono-phosphoryl- α-oximino-phenyl-essigsäurenitril.

**Beispiel 3**

Nach der im Beispiel 2 beschriebenen Methode wird ein in Wasser dispergierbarer Köder hergestellt, der 0,5 Gew.-% 2,2-Dimethyl-3-(β,β-dichlorvinyl)-cyclopropan-carbonsäure-α-cyano-3-phenoxy-4-fluor-benzylester und 1,0 Gew.-% Diethyl-thionophosphoryl-α-oximino-phenylessigsäurenitril enthält.

**Beispiel 4**

Nach der im Beispiel 2 beschriebenen Methode wird ein in Wasser dispergierbarer Köder hergestellt, der 0,25 Gew.-% 2,2-Dimethyl-3-(β,β-dichlorvinyl)-cyclo-propancarbonsäure-α-cyano-3-phenoxy-4-fluor-benzylester und
1,0 Gew.-% 0,0-Dimethyl-S-(methylaminocarbonylmethyl)-thiolphosphorsäureester enthält.

**Beispiel 5**

Nach der im Beispiel 2 beschriebenen Methode wird ein in Wasser dispergierbarer Köder hergestellt, der 0,5 Gew.-% 2,2-Dimethyl-3-(β,β-dichlorvinyl)-cyclopropan-carbonsäure- α-cyano-3-phenoxy-4-fluor-benzylester und 1,0 Gew.-% 0,0-Dimethyl-S-(methylaminocarbonylmethyl)-thiolphosphorsäureester enthält.

**Vergleichsbeispiel I**

Durch Vermischen von 2,2-Dimethyl-3-(β,β-dichlorvinyl)-cyclopropancarbonsäure-,α, -cyano-3-phenoxy-4-fluor-benzylester, hochdisperser Kieselsäure, und oberflächenaktiven Stoffen wird ein Suspensionskonzentrat hergestellt, das zu 10 Gew.-% aus 2,2-Dimethyl-3-(β,β-dichlor-vinyl)-cyclo-propancarbonsäure- α-cyano-3-phenoxy-4-fluor-benzylester besteht.

**Verwendungsbeispiele**

**Beispiel A**

Bekämpfung von Fliegen (Musca spp.) in Stallungen

In je 20 Stallungen von landwirtschaftlichen Betrieben wurden erfindungsgemäße Köderformulierungen in der Weise ausgebracht, daß man den jeweiligen Köder nach vorherigem Vermischen mit Wasser im Verhältnis von 1:1 in eine streichfähige Formulierung überführte und mit Pinseln auf verschiedene Gegenstände in den Stallungen in den jeweils gewünschten Mengen auftrug.

Das zum Vergleich eingesetzte bekannte Suspensionskonzentrat wurde nach vorherigem Verdünnen mit Wasser in der jeweils gewünschten Mengen verspritzt.

Für die Versuche wurden in Größe, Tierbestand (Rinder und Schweine) und Stärke des Fliegenbefalls vergleichbare Ställe ausgewählt.

In bestimmten Zeitabständen nach der Behandlung wurde in allen Ställen der Fliegenbefall bestimmt und die Wirkung der Präparate in % bonitiert. Dabei bedeutet 100 %, daß in allen Fällen ein befriedigender Wirkungsgrad erzielt wurde, und 0 % bedeutet, daß in keinem Fall ein befriedigender Wirkungsgrad erzielt wurde.

Präparate, Wirkstoffmengen und Versuchsergebnisse gehen aus der folgenden Tabelle hervor.

**Tabelle A**

Bekämpfung von Fliegen (Musca spp.) in Stallungen

| Präparat gemäß Beispiel | Wirkstoffmenge in $g/100\ m^2$ | Wirkungsgrad in % nach 4 Wochen | 6 Wochen | 10 Wochen |
|---|---|---|---|---|
| (1) | 1,25* | 94 | 94 | 89 |
| (2) | 0,625*<br>2,5** | 100 | 100 | 95 |
| (3) | 1,25*<br>2,5** | 100 | 95 | 100 |
| (4) | 0,625*<br>2,5*** | 100 | 100 | 100 |
| (5) | 1,25*<br>2,5*** | 100 | 94 | 94 |
| (I) (bekannt) | 9,0* | 74 | 68 | 58 |

*) 2,2-Dimethyl-3-(β,β-dichlorvinyl)-cyclopropancar-bonsäure-,α -cyano-3-phenoxy-4-fluor-benzylester
**) Diethyl-thionophosphoryl- α-oximino-phenylessigsäurenitril
***) 0,0-Dimethyl-S-(methylaminocarbonylmethyl)-thiol-phosphorsäureester

**Beispiel B**

Bekämpfung von Fliegen (Musca spp.) in Stallungen

In je 10 Stallungen, in denen wenige Tage bis maximal 2 Wochen zuvor verschiedene Pyrethroide in Form von Spritzmitteln ausgebracht worden waren und nicht befriedigend gewirkt hatten, so daß Pyrethroid-Resistenz vermutet werden mußte, wurden erfindungsgemäße Köderformulierungen in der Weise ausgebracht, daß man den jeweiligen Köder nach vorherigem Vermischen mit Wasser im Verhältnis von 1:1 in eine streichfähige Formulierung überführte und mit Pinseln auf verschiedene Gegenstände in den Stallungen in den jeweils gewünschten Mengen auftrug.

Für die Versuche wurden in Größe, Tierbestand (Rinder und Schweine) und Stärke des Fliegenbefalls vergleichbare Ställe ausgewählt.

In bestimmten Zeitabständen nach der Behandlung wurde in allen Ställen der Fliegenbefall bestimmt und die Wirkung der Präparate in % bonitiert. Dabei bedeutet 100 %, daß in allen Fällen ein befriedigender Wirkungsgrad erzielt wurde, und 0 % bedeutet, daß in keinem Fall ein befriedigender Wirkungsgrad erzielt wurde.

Präparate, Wirkstoffmengen und Versuchsergebnisse gehen aus der folgenden Tabelle hervor.

**Tabelle B**

Bekämpfung von Fliegen (Musca spp.) in Stallungen

| Präparat gemäß Beispiel | Wirkstoffmenge in $g/100\ m^2$ | Wirkungsgrad in % nach 4 Wochen | 6 Wochen |
|---|---|---|---|
| (1) | 1,25 *) | 70 | 70 |
| (3) | 1,25 *)<br>2,5 **) | 100 | 100 |

*) 2,2-Dimethyl-3-(β,β-dichlorvinyl)-cyclopropancar-bonsäure- α-cyano-3-phenoxy-4-fluor-benzylester
**) Diethyl-thionophosphoryl- α-oximino-phenylessigsäurenitril

**Patentansprüche**

Köder zur Bekämpfung von Fliegen bestehend aus
a) 0,1 bis 2,0 Gewichtsprozent 2,2-Dimethyl-3-(β,β-dichlorvinyl) -cyclopropancarbonsäure-α-cyano-3-phenoxy-4-flour-benzylester der Formel

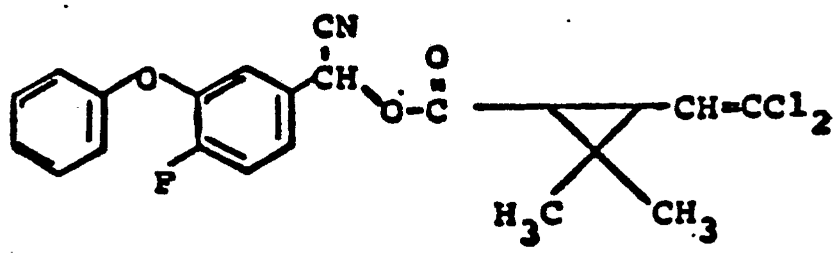

(I)

gegebenenfalls im Gemisch mit 0,1 bis 2,0 Gewichtsprozent eines oder mehrerer zu Ungezieferbekämpfung geeigneter Wirkstoffe,
b) gegebenenfalls 0,001 bis 5,0 Gewichtsprozent Formulierhilfsmitteln sowie gegebenenfalls weiteren Zusatzstoffen und
c) der Differenz aus 100 Gewichtsprozent und der Summe der prozentualen Anteile der übrigen Komponenten mindestens eines Fraßlockstoffes.

2. Verfahren zur Herstellung von Ködern gemäß Anspruch 1, dadurch gekennzeichnet daß man
- 0,1 bis 2,0 Gewichtsprozent 2,2-Dimethyl-3-(β,β-dichlorvinyl)-cyclopropancarbonsäure-α-cyano-3-phenoxy-4-flour-benzylester der Formel (I), gegebenenfalls im Gemisch mit 0,1 bis 2,0 Gewichtsprozent eines oder mehrerer zur Ungezieferbekämpfung geeigneter Wirksoffe,
- mit gegebenenfalls 0,001 bis 5,0 Gewichtsprozent Formulierhilfsmitteln versetzt,
- das dabei entstehende Gemisch mit der Differenz aus 100 Gewichtsprozent und der Summe der prozentualen Anteile der übrigen Komponenten mindestens eines Fraßlockstoffes sowie gegebenenfalls mit weiteren Zusatzstoffen intensiv vermischt und gegebenenfalls anschließend mahlt.

**Claims**

1. Baits for combating flies, consisting of

a) 0.1 to 2.0 percent by weight of 2,2-dimethyl-3-(β,β-dichlorovinyl)-cyclopropanecarboxylic acid α-cyano-3-phenoxy-4-fluoro-benzyl ester of the formula

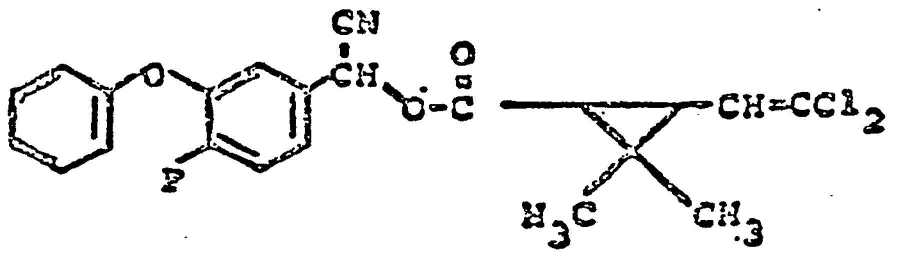 (I)

if appropriate as a mixture with 0.1 to 2.0 percent by weight of one or more active compounds suitable for combating vermin,

b) if appropriate 0.001 to 5.0 percent by weight of formulation auxiliaries and, if appropriate, other additives and

c) the difference between 100 percent by weight and the sum of the percentage contents of the remaining components, of at least one ingestion attractant.

2. Process for the preparation of baits according to Claim 1, characterised in that

- 0.1 to 2.0 percent by weight of 2,2-dimethyl-3-(β,β-dichlorovinyl)-cyclopropanecarboxylic acid α-cyano-3-phenoxy-4-fluoro-benzyl ester of the formula (I), if appropriate as a mixture with 0.1 to 2.0 percent by weight of one or more active compounds suitable for combating vermin,

- is mixed with, if appropriate, 0.001 to 5.0 percent by weight of formulation auxiliaries,

- the mixture thereby formed is intensively mixed with the difference between 100 percent by weight and the sum of the percentage contents of the renaining components, of at least one ingestion attractant and, if appropriate, with other additives, and, if appropriate, is then ground.

**Revendications**

1. Appâts en vue de combattre les mouches, comprenant:

a) 0,1 à 2% en poids d'ester α-cyano-3-phénoxy-4-fluoro-benzylique d'acide 2,2-diméthyl-3-(β,β-dichlorovinyl)-cyclopropane-carboxylique de formule:

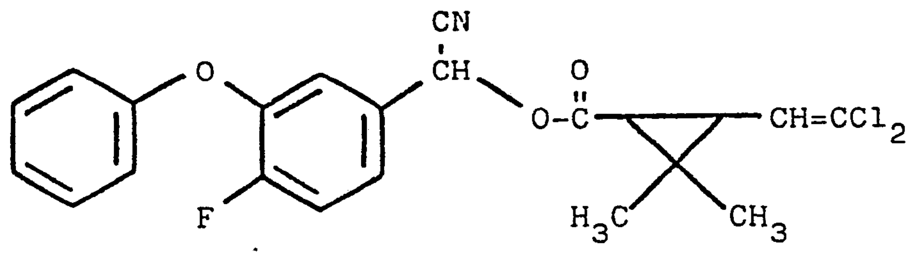 (I)

éventuellement en mélange avec 0,1 à 2% en poids d'une ou plusieurs substances actives appropriées pou combattre les insectes,

b) éventuellement 0,001 à 5% en poids d'agents auxiliaires de formulation, ainsi qu'éventuellement d'autres additifs, et

c) la différence de 100% en poids et de la somme des pourcentages des autres composants d'au moins un appât à ingérer.

2. Procédé de préparation d'appâts selon la revendication 1, caractérisé en ce que:

à 0,1 à 2% en poids d'ester α-cyano-3-phénoxy-4-fluoro-benzylique d'acide 2,2-diméthyl-3-(β,β-di-chlorovinyl)-cyclopropane-carboxylique de formule (I), éventuellement en mélange avec 0,1 à 2% en poids d'une ou plusieurs substances actives appropriées pour combattre les insectes,

- on ajoute éventuellement 0,001 à 5% en poids d'agents auxiliaires de formulation,

- on mélange vigoureusement le mélange ainsi formé avec la différence de 100% en poids et de la somme

des pourcentages des autres composants d'au moins un appât à ingérer, ainsi qu'éventuellement avec d'autres additifs et ensuite, on broie éventuellement.